# EUROPEAN PATENT APPLICATION

(11) **EP 2 109 169 A2**
(43) Date of publication of application: **14.10.2009**
(21) Application number: 08170672.3
(22) Date of filing: 04.12.2008
(51) Int. Cl.: H01M 4/88, H01M 4/86

(54) **Membrane-electrode assembly for direct liquid fuel cell and method of manufacturing the same**

(30) Priority: 11.04.2008 KR 20080033520
(71) Applicant: Gwangju Institute of Science and Technology, Kwangju 500-712 (KR)
(72) Inventor: Lee, Jaeyoung, Gwangju 500-712 (KR); Uhm, Sunghyun, Gwangju 500-712 (KR)
(74) Representative: Rupp, Christian

(57) **Abstract**

A membrane-electrode assembly for a direct liquid fuel cell having improved performance and stability and a method of manufacturing the same are provided. The membrane-electrode assembly includes an anode including a first main catalyst layer, a second main catalyst layer, and a co-catalyst layer disposed between the main catalyst layers, a cathode, and a polymer electrolyte membrane formed between the second main catalyst layer of the anode and the cathode. In addition, the method includes forming an anode including a first main catalyst layer, a second main catalyst layer, and a co-catalyst layer disposed between the main catalyst layers, forming a cathode, and forming a polymer electrolyte membrane between the second main catalyst layer of the anode and the cathode.

## Description

### BACKGROUND OF THE INVENTION

### 1. Field of the Invention

The present invention relates to a fuel cell, and more particularly, to a membrane-electrode assembly for a direct liquid fuel cell and a method of manufacturing the same.

### 2. Description of the Related Art

Fuel cells are not only environment-friendly but are also expected to be an adequate substitute for conventional energy systems (e.g., secondary batteries and capacitors) in recent times of increasing demand for high-output mobile power sources.

Formic acid, formaldehyde, methanol and ethanol can be used as fuel for a direct liquid fuel cell. Among these fuels, formic acid is oxidized into carbon dioxide via two different pathways - direct oxidation and indirect oxidation. Current research into formic acid fuel batteries focuses on developing an optimal catalyst for direct oxidation of formic acid.

The most common anode for direct formic acid fuel cells(DFAFCs) catalysts are a platinum-ruthenium alloy catalyst and a palladium catalyst which are used as a direct methanol fuel cell, but these catalysts fall below a desired level of performance or long-term stability. Moreover, to achieve a desired level of performance, a fuel cell needs a large amount of catalyst.

Accordingly, there is need for research into improving performance of a formic acid fuel cell to a level required for actual driving conditions, improving stability for long-term operation, and maximizing utilization of a catalyst in order to ensure a competitive production cost for early implementation.

### SUMMARY OF THE INVENTION

The present invention is directed to a membrane-electrode assembly having improved performance and stability.

The present invention is also directed to a method of manufacturing a membrane-electrode assembly having improved performance and stability.

According to an embodiment of the present invention, a membrane-electrode assembly includes: an anode including a first main catalyst layer, a second main catalyst layer, and a co-catalyst layer disposed between the main catalyst layers; a cathode; and a polymer electrolyte membrane formed between the second main catalyst layer of the anode and the cathode.

According to another embodiment of the present invention, a method of manufacturing a membrane-electrode assembly includes: forming an anode including a first main catalyst layer, a second main catalyst layer, and a co-catalyst layer disposed between the main catalyst layers; forming a cathode; and forming a polymer electrolyte membrane between the second main catalyst layer of the anode and the cathode.

### BRIEF DESCRIPTION OF THE DRAWINGS

These and/or other objects, aspects and advantages of the invention will become apparent and more readily appreciated from the following description of exemplary embodiments shown in the accompanying drawings, in which:
FIG. 1 is a cross-sectional view of a membrane-electrode assembly having a multi-layered structure according to an exemplary embodiment of the present invention;
FIGS. 2A to 2C are cross-sectional views showing a method of fabricating a membrane-electrode assembly according to an exemplary embodiment of the present invention;
FIGS. 3A and 3B are graphs showing performance comparison results of a single-layer electrode and a multi-layered electrode;
FIGS. 4A to 4C are graphs of cell voltage versus concentration of a precursor;
FIG. 5 is a graph of cell voltage versus potential applied for OPD/UPD electrochemical deposition; and
FIG. 6 is a graph for comparing durabilities of a commercially-available (conventional) membrane-electrode assembly and a membrane-electrode assembly according to the present invention.

### DETAILED DESCRIPTION OF THE INVENTION

Reference will now be made in detail to exemplary embodiments of the present invention, examples of which are shown in the accompanying drawings. When the same element appears in different drawings, it will always be denoted by the same reference numeral and it will only be described once.

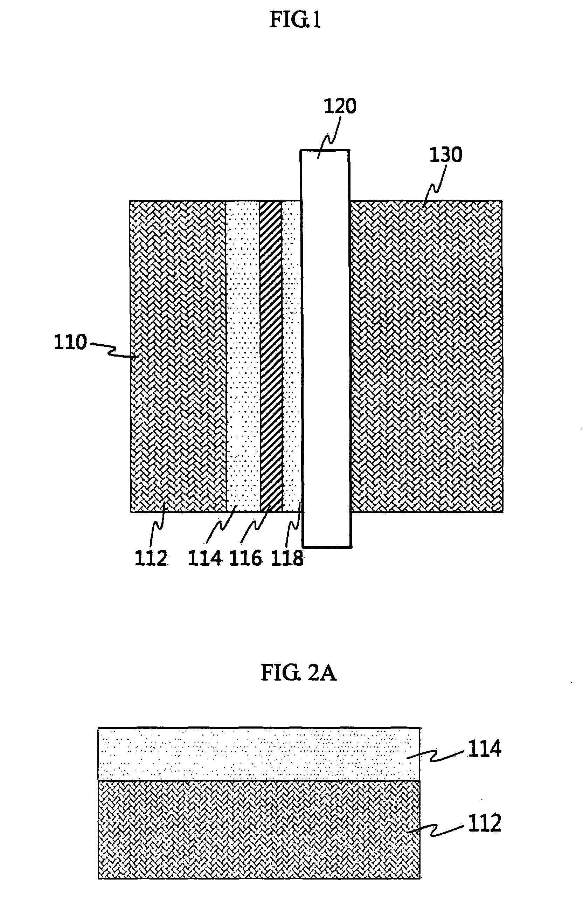

FIG. 1 is a cross-sectional view of a membrane-electrode assembly having a multi-layered structure according to an exemplary embodiment of the present invention. As an example of a membrane-electrode assembly of a fuel cell, a formic acid fuel cell using a formic acid solution as fuel will be described below, but it should be understood that the present invention is not limited to this example and can use methanol, formaldehyde or ethanol as fuel.

Referring to FIG. 1, a membrane-electrode assembly (MEA) may include an anode 110, a polymer electrolyte membrane 120, and a cathode 130. The anode 110 may include a fuel diffusion layer 112, a first main catalyst layer 114, a co-catalyst layer 116, and a second main catalyst layer 118.

In a direct formic acid fuel cell, formic acid is oxidized by an electrochemical reaction shown in Formula 1 below, thereby producing carbon dioxide, hydrogen ions and electrons. The hydrogen ions produced at the anode 110 move to the cathode 130 through the polymer electrolyte membrane 120, and at the cathode 130, the hydrogen ions react with oxygen and electrons as shown in Formula 2 to produce water. Meanwhile, the electrons produced at the anode 110 move through an external circuit, and convert the changes in free energy due to the chemical reaction into electric energy.

In the overall reaction, shown in Formula 3, formic acid reacts with oxygen to produce water and carbon dioxide, and a difference of electric potential becomes 1.45V.

<Formula 1> HCOOH -→ CO₂ + 2H⁺ + 2e⁻

<Formula 2> 0.5O₂ + 2H⁺ + 2e⁻ -→ H₂O

<Formula 3> HCOOH + 0.50₂ -→ CO₂ + H₂O

FIGS. 2A to 2C are cross-sectional views showing a method of manufacturing a membrane-electrode assembly according to an exemplary embodiment of the present invention.

Referring to FIG. 2A, a first main catalyst layer 114 is formed on a fuel diffusion layer 112.

Formic acid has difficulty in controlling diffusion due to its own hydrophilic and hygroscopic properties. The fuel diffusion layer 112 can solve these problems and facilitate diffusion of gas separated from the formic acid fuel.

That is, when high-concentration formic acid is used as fuel, rapid diffusion can occur, but the fuel diffusion layer 112 can prevent such rapid diffusion and also prevent a decrease in ion conductivity. In addition, as penetration through the membrane is minimized, poisoning can be reduced.

When low-concentration formic acid is used as fuel, the fuel diffusion layer 112 may be thermally or electrochemically treated to improve diffusion of formic acid. The fuel diffusion layer 112 may be formed of carbon fiber or carbon paper.

The first main catalyst layer 114 may be formed by mixing a platinum catalyst, an ionomer and a solvent mixture, and the solvent mixture may be a catalyst ink.

The first main catalyst layer 114 may be formed by spraying, painting, doctor-blading, or lithography.

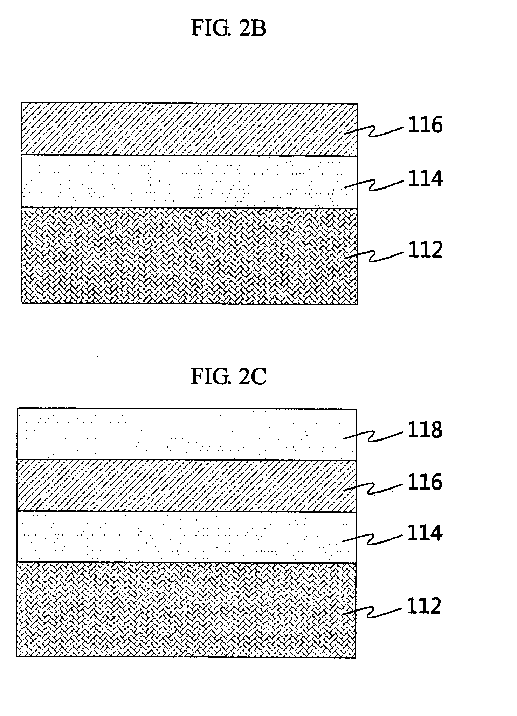

Referring to FIG. 2B, the first main catalyst layer 114 is placed in an electrode holder and then electrochemically treated, thereby forming a co-catalyst layer 116 at one side of the first main catalyst layer 114. The co-catalyst layer 116 may include one of the group-5B metal elements, and preferably, Bi, Sb and As.

The metal formed in the co-catalyst layer 116 may be formed by dissolving a precursor in a solvent, and the Bi, Sb or As precursor may be Bi₂O₃, Bi(NO₃)₃, Sb₂O₃, (Sb)₂(SO₄)₃ or As₂O₃. The solvent may be a 0.1 to 0.5M perchloric acid solution.

The electrochemical deposition may be OPD or UPD. OPD is electrochemical deposition at a lower electric potential than the standard equilibrium potential, and UPD is electrochemical deposition of metal at a higher electric potential than the standard equilibrium potential and with a lower energy so that the metal can be stably maintained in an environment in which a fuel cell is actually used.

The electrochemical deposition may be performed using an apparatus consisting of a three-electrode system placed in an electrode holder, in which three electrodes are a working electrode, a counter electrode and a reference electrode.

An electrolyte is contained in the electrode holder, and the first main catalyst layer 114 may be placed on the working electrode. The electrolyte may be a solvent in which a metal precursor is dissolved, and an electric potential applied for deposition may depend upon an electric potential of the counter electrode controlled based on the reference electrode.

The electrochemical deposition may be performed at an electric potential ranging from -300mV to +300mV, and the potential may be changed according to a degree to which the first main catalyst layer 114 is hydrophobic. The electrochemical deposition may be performed for 5 to 60 minutes.

Referring to FIG. 2C, a second main catalyst layer 118 is formed on the co-catalyst layer 116. The second main catalyst layer 118 may be formed by mixing a platinum catalyst, an ionomer, and a solvent mixture, like the first main catalyst layer 114. The solvent mixture may be a catalyst ink.

The second main catalyst layer 118 may be formed by spraying, painting, doctor-blading, or lithography.

A polymer electrolyte membrane 120 and a cathode 130 are stacked on the anode 110 including the first main catalyst layer 114, the co-catalyst layer 116 and the second catalyst layer 118 formed as described with reference to FIGS. 2A to 2C, and then they are pressed at high temperature and high pressure to manufacture a membrane-electrode assembly shown in FIG. 1.

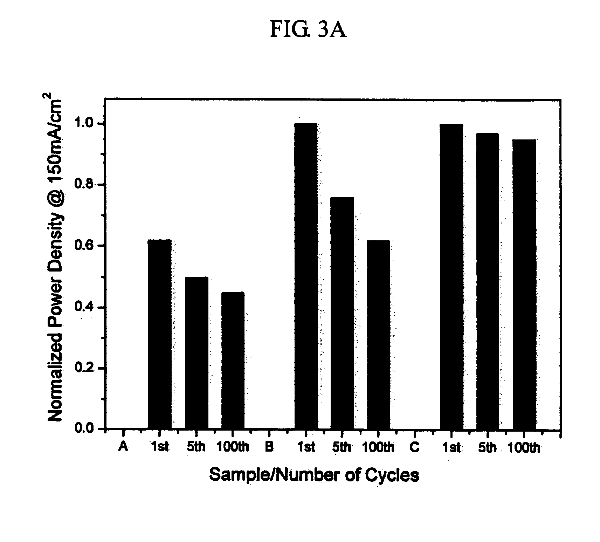

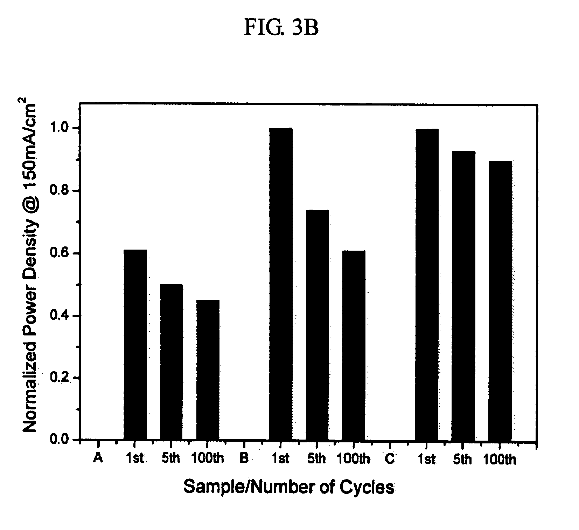

FIGS. 3A and 3B are graphs showing performance comparison results of a single-layer electrode and a multi-layered electrode. Referring to FIG.. 3, differences in performance depending on the presence of a first main catalyst layer 114, a co-catalyst layer 116 and a second main catalyst layer 118 are compared. However, descriptions on overlapping procedures in a manufacturing process throughout Comparative Examples will be omitted.

### Comparative Example 1: Membrane-electrode assembly having only first main catalyst layer

In Comparative Example 1, the fuel diffusion layer 112 was formed of carbon fiber (SGL Technologies, Germany), and the first main catalyst layer 114 was formed by stirring a mixed solution of a carbon-supported catalyst, an ionomer, and a solvent mixture, and by spraying the mixed solution.

The carbon-supported catalyst was formed by mixing carbon (Vulcan XC-72) with a black catalyst (Aldrich). 60% carbon and 40% black catalyst were mixed together to form about 0.5mg/cm² of the carbon-supported catalyst. About 10% ionomer (5wt% Nafion solution) was used for this quantity of the carbon-supported catalyst, an isopropyl alcohol (IPA) solution was used as the solvent mixture.

The membrane-electrode assembly was manufactured by sequentially stacking the anode 110 including the first main catalyst layer 114 formed as described above, the polymer electrolyte membrane 120, and the cathode 130, and pressing them at 10MPa and 140°C for 5 minutes.

The polymer electrolyte membrane 120 was formed of Nafion (DuPont), and the cathode 130 was formed by stirring a mixed solution of a carbon-supported catalyst, an ionomer, and a solvent mixture. The carbon-supported catalyst was formed by mixing 40% black catalyst with 60% carbon to have a concentration of 1.5mg/cm².

A formic acid solution was used as fuel. A relative humidity was maintained at 80% oxygen.

### Comparative Example 2: Membrane-electrode assembly having first main catalyst layer and Bi co-catalyst layer

In Comparative Example 2, a membrane-electrode assembly was manufactured by sequentially forming a first main catalyst layer 114 and a Bi co-catalyst layer 116 using the same method as described in Comparative Example 1.

The co-catalyst layer 116 was formed by dissolving a 5mM Bi₂O₃ - Bi precursor - in a 0.1M perchloric acid solution through UPD. In order to deposit Bi, the working potential of +100mV on the basis of equilibrium potential was applied. The deposition was performed for 1 to 15 minutes.

### Comparative Example 3: Membrane-electrode assembly having first main catalyst layer and Sb co-catalyst layer

In Comparative Example 3, a membrane-electrode assembly was manufactured by sequentially forming a first main catalyst layer 114 and a Sb co-catalyst layer 116 using the same method as described in Comparative Example 1.

The co-catalyst layer 116 was formed by dissolving 50mM Sb₂O₃ - Sb precursor - in a 0.1 M perchloric solution using UPD. In order to deposit Sb, the working potential of +100mV on the basis of equilibrium potential was applied. The deposition was performed for 1 to 15 minutes.

### Comparative Example 4: Membrane-electrode assembly having first and second main catalyst layers and Bi co-catalyst layer

In Comparative Example 4, a membrane-electrode assembly was manufactured by forming a first main catalyst layer 114 and a Bi co-catalyst layer 116 using the same method as described in Comparative Example 2, and then forming a second main catalyst layer 118.

As described above, formation of the first main catalyst layer 114 was followed by formation of the co-catalyst layer 116 using a Sb precursor, and then the second main catalyst layer 118 was formed on the co-catalyst layer 116 using the same material and method as the first main catalyst layer 114.

### Comparative Example 5: Membrane-electrode assembly having first and second main catalyst layers and Sb co-catalyst layer

In Comparative Example 5, a membrane-electrode assembly was manufactured by forming a first main catalyst layer 114 and a Sb co-catalyst layer 116 using the same method as described in Comparative Example 3, and then forming a second main catalyst layer 118.

As described above, formation of the first main catalyst layer 114 was followed by formation of the co-catalyst layer 116 using a Sb precursor, and then the second main catalyst layer 118 was formed on the co-catalyst layer 116 using the same material and method as the first main catalyst layer 114.

### Analysis 1 -Analysis on FIGS. 3A and 3B

Current-voltage (I-V) characteristics of membrane-electrode assemblies of Comparative Examples 1 to 5 were measured at 1^{st}, 5^{th} and 100^{th} cycles, and normalized power densities for a single-layered electrode and a multi-layered electrode are shown in FIGS. 3A and 3B. A current of 150mA/cm² was constantly applied.

FIG. 3A is a graph showing standardized values obtained from Comparative Examples 1, 2 and 4. Referring to FIG. 3A, when only the first main catalyst layer 114 was formed (Comparative Example 1), the power density was about 0.6 at the 1^{st} cycle, dropped to about 0.5 at the 5^{th} cycle, and dropped to about 0.45 at the 100^{th} cycle.

When the first main catalyst layer 114 and the Bi co-catalyst layer 116 were formed (Comparative Example 2), the power density was relatively high, about 1.0, at the 1^{st} cycle, but dramatically dropped to about 0.7 at the S^{th} cycle. The power density was dropped again to about 0.6 at the 100^{th} cycle, which was similar to when only the first main catalyst layer 114 was formed.

However, when the first main catalyst layer 114, the Bi co-catalyst layer 116 and the second main catalyst layer 118 were all formed (Comparative Example 4), the power density was about 1.0 at the 1^{st} cycle, which was similar to when the first and second main catalyst layers 114 and 118 were formed, dropped only slightly to about 0.9 at the 5^{th} cycle, and made no significant change from the S^{th} cycle to the 100^{th} cycle.

Referring to FIG. 3b, when only the first main catalyst layer 114 was formed (Comparative Example 1), the power density was similar to the result of FIG. 3A, and when the Sb co-catalyst layer 116 was formed on the first main catalyst layer 114 (Comparative Example 3), the power density was relative high, about 1.0, at the 1^{st} cycle, but dramatically dropped to about 0.7 at the 5^{th} cycle. The power density was dropped again to about 0.6 at the 100^{th} cycle, which was similar to when only the first main catalyst layer 114 was formed.

However, when the first main catalyst layer 114, the co-catalyst layer 116 and the second main catalyst layer 118 were all formed (Comparative Example 5), the power density was about 1.0 at the 1^{st} cycle, which was similar to when the first and second main catalyst layers 114 and 118 were formed, dropped only slightly to about 0.9 at the 5^{th} cycle, and made no significant change from the 5th cycle to the 100^{th} cycle.

From the analysis results in FIGS. 3A and 3B, common characteristics between a single-layered electrode and a multi-layered electrode can be found. That is, it can be noted that as compared with when only the first main catalyst layer 114 was formed, when the Bi or Sb co-catalyst layer 116 is additionally formed, the power density was increased at the 1^{st} cycle, but drastically dropped as repeating cycles of measurement. It can be also noted that when the second main catalyst layer 118 is additionally formed on the co-catalyst layer 116, the power density is increased at the 1^{st} cycle, and dropped only slightly as repeating cycles of measurement.

While, in all Comparative Examples, the co-catalyst layer 116 was formed by UPD, even if formed by OPD, similar results to those shown in FIGS. 3A and 3B may be deduced by standardizing measurement results.

These results show that the co-catalyst layer 116 formed together with the first main catalyst layer 114 is effective in a disposable fuel cell with an improved power density, and the second main catalyst layer 118 formed together with the first main catalyst layer 114 and the co-catalyst layer 116 can be used in a fuel cell continuously maintaining the improved power density.

It can be noted that the deposition of the co-catalyst layer 116 overcame an uneven of the first main catalyst layer 114, and the plating of the second main catalyst layer 118 overcame instability of the co-catalyst layer 116.

Also, the co-catalyst layer 116 may be sandwiched between the first and second main catalyst layers 114 and 118, thereby preventing loss of a catalyst due to repeated use.

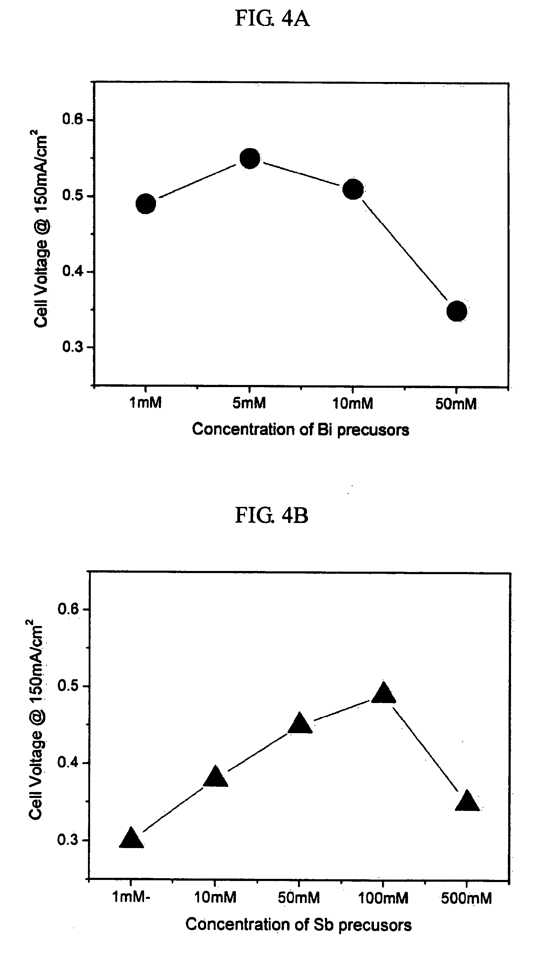

### Analysis 2 - Analysis on FIGS. 4A to 4C

FIGS. 4A to 4C show graphs of cell voltage of the membrane-electrode assemblies versus concentration of precursors.

When power density of a fuel cell is in a range from 50 to 100m W/cm², it is considered that the fuel cell is possible to come to commercialization. Here, although the co-catalyst layer 116 is formed of one selected from the Group 5B metals, the power density may vary according to the kind of the used metal.

Accordingly, in Analysis 2, each cell voltage was measured at the same current level with respect to each metal of Group 5B to determine the probability of commercialization with respect to each metal. Here, concentrations of precursors for the respective metals were varied during the measurement of cell voltages.

FIGS. 4A to 4C show elements determined to be possibly commercialized by experiments, and appropriate concentration ranges of their precursors. In the experiments, the co-catalyst layers 116 were formed using the respective precursors dissolved in a 0.1M perchloric acid solution. In order to deposit the co-catalyst layers 116 using the respective precursors, UPD was applied, working potential of +100mV on the basis of equilibrium potential was applied to each sample. A current of 150mA/cm² was constantly applied to each membrane-electrode assembly including the co-catalyst layer 116 as formed, and then a cell voltage was measured.

FIG. 4A shows a measurement result of the membrane-electrode assembly including the Bi co-catalyst layer 116. As shown in FIG. 4A, when a 1mM Bi precursor was added, the cell voltage was about 0.5V, and when a 5mM Bi precursor was added, the cell voltage was 0.55V, which was the highest level. Also, when a 10mM Bi precursor was added, the cell voltage gradually decreased to about 0.5V, and when a 50mM Bi precursor was added, the cell voltage drastically decreased to about 0.35V.

That is, in the membrane-electrode assembly including the Bi co-catalyst layer 116, there is a possibility of commercialization when a concentration of the Bi precursor is in the range from about 1mM to about 50mM.

FIG. 4B shows a measurement result of the membrane-electrode assembly including the Sb co-catalyst layer 116. As shown in FIG. 4B, when a 1mM Sb precursor was added, the cell voltage was about 0.3V, but when a 10mM Sb precursor was added, the cell voltage was increased to 0.4V. Also, when a 50mM Sb precursor was added, the cell voltage was gradually increased to 0.45V, and when a 100mM Sb precursor was added, the cell voltage was the highest level of 0.5V. But, when a 500mM Sb precursor was added, the cell voltage was unexpectedly dropped to 0.45V

That is, the membrane-electrode assembly including the Sb co-catalyst layer 116 can come to commercialization when a concentration of the Sb precursor is in the range from about 1mM to about 500mM.

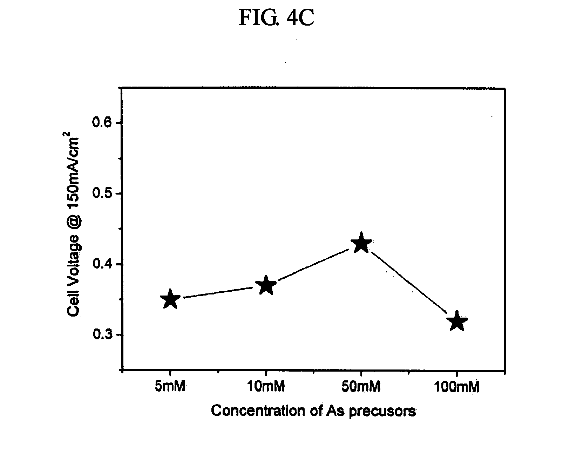

FIG. 4C shows a measurement result of the membrane-electrode assembly including the As co-catalyst layer 116. As shown in FIG. 4C, When a 5mM As precursor was added, the cell voltage was about 0.35V. When a 10mM As precursor was added, there was almost no change in cell voltage, and when a 50mM As precursor was added, the cell voltage was about 0.45V, which was the highest level. However, when a 100mM As precursor was added, the cell voltage decreased to about 0.35V.

That is, in the membrane-electrode assembly including the As co-catalyst layer 116, there is a possibility of commercialization when a concentration of the As precursor is in the range from about 5mM to about 100mM.

Consequently, this analysis results show a probability of commercializing the membrane-electrode assemblies using Group 5B metals, such as Bi, Sb and As, when applied in fuel cells, and appropriate concentration ranges for respective precursors. However, FIGS. 4A to 4C show the measurement results of only the Bi, Sb and As elements, but the present invention is not limited these elements. Thus, it should be clear that other metals in Group 5B can be also used in corresponding concentration range to implement the present invention.

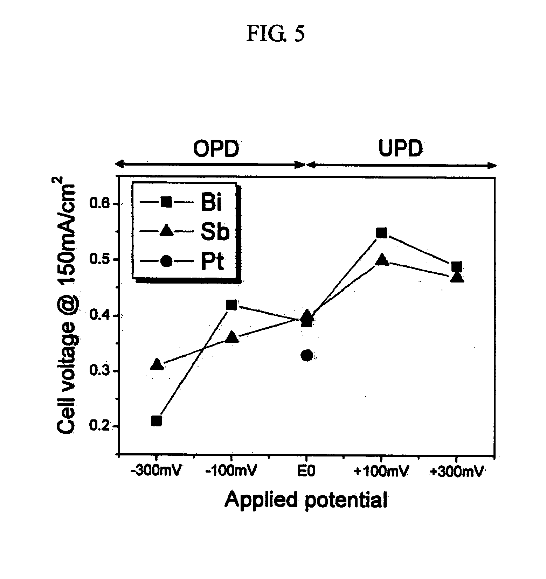

### Analysis 3: Analysis on FIG. 5

As described above, the co-catalyst layer may be formed by an electrochemical deposition technique such as underpotential deposition (UPD) or overpotential deposition (OPD). However, a variety of results may be obtained according to the ranges of voltages applied for the electrochemical deposition.

Thus, in Analysis 3, variation of cell voltages was measured when the uniform current was applied to the membrane-electrode assemblies including the co-catalyst layers 116 respectively formed by induction of various applied voltages.

To be specific, in the experiments for forming the co-catalyst layers 116 using Bi and Sb, the co-catalyst layers were formed using a 5mM Bi precursor and a 100mM Sb precursor with different application voltages, respectively. Afterward, a current of 150mA/cm² was uniformly applied to the membrane-electrode assemblies including these co-catalyst layers as formed, and their cell voltages were measured.

FIG. 5 is a graph showing cell voltage versus a change in voltage applied for OPD/UPD electrochemical deposition.

When +100mV was applied in order to form the co-catalyst layer 116 using the Bi precursor by UPD, the cell voltage was about 0.55V and the power density was about 82.5mW/cm². Also, when +300mV was applied, the cell voltage decreased slightly to about 0.5 V.

When +100mV was applied in order to form the co-catalyst layer 116 using the Sb precursor, the cell voltage was about 0.5V and the power density was about 75mW/cm². Also, when +300mV was applied, the cell voltage decreased slightly to about 0.45V.

Also, when -100mV was applied in order to form the co-catalyst layer 116 using the Bi precursor by OPD, the cell voltage was about 0.45V, and when -300mV was applied, the cell voltage decreased dramatically to about 0.2V.

However, when -100mV was applied in order to form the co-catalyst layer 116 using the Sb precursor, the cell voltage was about 0.35V, and when -300mV was applied, the cell voltage decreased slightly to about 0.3V.

From the measurement result, considering a general Pt catalyst having an average cell voltage of about 0.5V, it can be noted that the formation of the co-catalyst layer 116 formed using the Bi or Sb precursor by UPD or OPD can result in a generally higher cell voltage than the Pt catalyst (except for OPD treatment at -300mV).

Particularly, it was found that the highest cell voltage can be obtained when the co-catalyst layer 116 is formed using Bi or Sb by UPD at a voltage of 100mV.

Since these cell voltages are within the power density range of 50 to 100mW/cm² for commercialization of a direct liquid fuel cell, it can be seen that the membrane-electrode assemblies according to the present invention performs well enough to be commercialized.

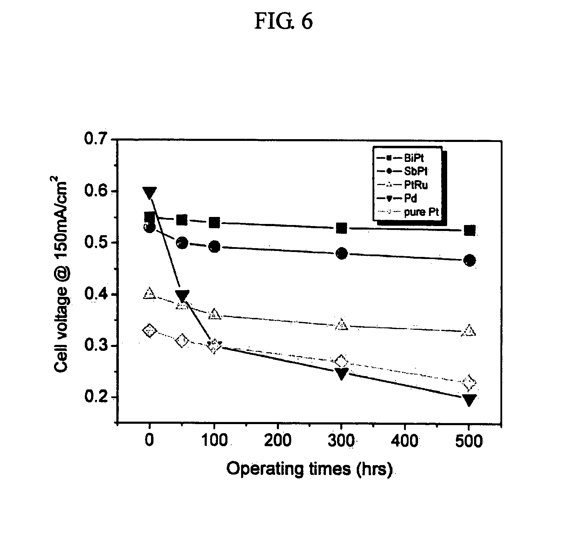

### Analysis 4: Analysis on FIG. 6

This is about a durability experiment for the membrane-electrode assembly according to the present invention and a commercialized membrane-electrode assembly.

In Analysis 6, membrane-electrode assemblies having an anode formed using the Bi precursor and the Sb precursor are denoted BiPt and SbPt, respectively, and membrane-electrode assemblies having an anode formed using commercialized catalysts are denoted PtRu, Pd and Pt, respectively. Each cell voltage was measured while a current of 150mA/cm² was constantly applied.

FIG. 6 is a graph for comparing durabilities of a commercialized membrane-electrode assembly and the membrane-electrode assembly according to the present invention.

Referring to FIG. 6, a Pt that has not been operated exhibited a cell voltage of about 0.35V, which is the lowest level. After 50 hours of operation, the cell voltage slightly decreased to about 0.3V, after 100 hours of operation, it slightly decreased to about 0.29V, after 300 hours of operation, it decreased to 0.25V, and after 500 hours of operation, it decreased to 0.23V.

A Pd that has not been operated exhibited the highest cell voltage of 0.6V, but after 50 hours of operation, it decreased drastically to 0.4V, after 100 hours of operation, it decreased to 0.3V, after 300 hours of operation, it decreased to 0.24V, which is lower than the Pt, and finally after 500 hours of operation, it decreased to the lowest level of 0.2V.

A PtRu that has not been operated exhibited a cell voltage of 0.4V, after 50 hours of operation, the cell voltage was about 0.38V, after 100 hours of operation, it was about 0.35V, and after 300 and 500 hours of operation, it still remained about 0.35V.

A SbPt that has not been operated exhibited a high cell voltage of about 0.54V, and even after 500 hours of operation, the cell voltage remained about 0.5V without a large drop.

A BiPt that has not been operated also exhibited a high cell voltage of about 0.55V, and even after 50 to 500 hours of operation, the cell voltage remained about 0.5V or more.

Consequently, the BiPt and SbPt exhibited higher cell voltages even after a long period of operation than the currently-commercialized membrane-electrode assembly, and thus durability can be significantly increased.

According to the present invention, formation of an anode including a first main catalyst layer, a co-catalyst layer and a second main catalyst layer can result in improvement in performance and stability.

In other words, the first main catalyst layer and the co-catalyst layer can prevent loss of a catalyst due to non-uniform deposition, and a decrease in amount of the catalyst consumed.

Moreover, formation of the second main catalyst layer on the co-catalyst layer can reduce instability due to the co-catalyst layer.

Although a few exemplary embodiments of the present invention have been shown and described in detail, it will be appreciated by those skilled in the art that changes may be made to the described embodiments without departing from the principles and spirit of the invention, the scope of which is defined by the claims and their equivalents.

## Claims

1. A membrane-electrode assembly, comprising:
an anode including a first main catalyst layer, a second main catalyst layer, and a co-catalyst layer disposed between the main catalyst layers;
a cathode; and
a polymer electrolyte membrane formed between the second main catalyst layer of the anode and the cathode.

2. The membrane-electrode assembly according to claim 1, wherein the co-catalyst layer is formed of one selected from the Group 5B metals.

3. The membrane-electrode assembly according to claim 2, wherein the co-catalyst layer includes one of Bi, Sb, and As.

4. The membrane-electrode assembly according to claim 1, wherein the co-catalyst layer is formed by one of underpotential deposition (UPD) and overpotential deposition (OPD).

5. The membrane-electrode assembly according to claim 1, wherein the second main catalyst layer prevents loss of the co-catalyst layer together with the first main catalyst layer.

6. The membrane-electrode assembly according to claim 1, wherein the second main catalyst layer is formed of the same materials as the first main catalyst layer.

7. The membrane-electrode assembly according to claim 1, wherein the second main catalyst layer is formed to a smaller thickness than the first main catalyst layer.

8. A method of manufacturing a membrane-electrode assembly, comprising:
forming an anode including a first main catalyst layer, a second main catalyst layer and a co-catalyst layer disposed between the main catalyst layers;
forming a cathode; and
forming a polymer electrolyte membrane between the second main catalyst layer of the anode and the cathode.

9. The method according to claim 8, wherein the co-catalyst layer is formed of one selected from the group consisting of the Group 5B metals.

10. The method according to claim 9, wherein the co-catalyst layer includes one of Bi, Sb and As.

11. The method according to claim 10, wherein the co-catalyst layer is formed using a Bi precursor at a concentration ranging from about 1mM to about 50mM.

12. The method according to claim 10, wherein the co-catalyst layer is formed using a Sb precursor at a concentration ranging from about 1mM to about 500mM.

13. The method according to claim 10, wherein the co-catalyst layer is formed using a As precursor at a concentration ranging from about 1mM to about 100mM.

14. The method according to claim 8, wherein the co-catalyst layer is formed by one of UPD and OPD.

15. The method according to claim 14, wherein the UPD is performed in a range of + 1mV to +300mV vs. equilibrium potential.

16. The method according to claim 14, wherein the OPD is performed in a range of -1mV to -300mV vs. equilibrium potential..

17. The method according to claim 8, wherein the forming of the anode includes:
forming the first main catalyst layer; forming the co-catalyst layer at one side of the first main catalyst layer; and forming the second main catalyst layer at one side of the co-catalyst layer.

18. The method according to claim 17, wherein the second main catalyst layer is formed of the same materials as the first main catalyst layer.

19. A membrane-electrode assembly, comprising:
an anode including a first main catalyst layer and a co-catalyst layer;
a cathode; and
a polymer electrolyte membrane formed between the co-catalyst layer of the anode and the cathode.

20. The membrane-electrode assembly according to claim 19, wherein the co-catalyst layer is formed of one of Bi, Sb and As.
